# FASCICULE DE BREVET EUROPEEN

(11) **EP 0 681 677 B1**
(45) Date de publication et mention de la délivrance du brevet: **16.04.1997**
(21) Numéro de dépôt: 94905770.7
(22) Date de dépôt: 01.02.1994
(51) Int. Cl.: F26B 5/08, A23N 12/08

(54) **ESSOREUSE A EFFET CENTRIFUGE POUR DES PRODUITS EN VRAC**
ZENTRIFUGE FÜR SCHÜTTGUT
CENTRIFUGAL DRIER FOR LOOSE MATERIALS

(30) Priorité: 02.02.1993 FR 9301375
(43) Date de publication de la demande: 15.11.1995
(73) Titulaire: FREEZE AGRO INGENIERIE, F-29800 Pencran (FR)
(72) Inventeur: LE LEZ, Jean, F-29800 Pencran (FR)
(74) Mandataire: Le Faou, Daniel
(86) Numéro de dépôt international: FR9400125
(87) Numéro de publication internationale: WO9418513

(56) Documents cités:
- FR-A- 2 493 185
- FR-A- 2 625 799
- GB-A- 609 768
- US-A- 1 623 017

## Description

La présente invention concerne une essoreuse à effet centrifuge pour des produits en vrac.

Elle est utile, par exemple, pour l'essorage de produits alimentaires, notamment feuillus, tels que des herbes aromatiques.

Dans l'industrie alimentaire, il est bien connu d'essorer les produits alimentaires à traiter, après leur lavage et avant toute transformation ou opération ultérieure, afin de les débarasser de leur eau résiduelle.

C'est notamment le cas des herbes aromatiques que l'on lave et l'on essore avant un traitement de surgélation, de congélation ou de déshydratation.

Les essoreuses actuellement disponibles consistent en des machines à effet centrifuge qui comportent un tambour rotatif de forme cylindrique.

Les plus grandes de ces essoreuses permettent de traiter jusqu'à 500 à 800 kg d'herbes aromatiques par heure, ce qui est relativement peu élevé pour une production industrielle.

Elles fonctionnent en discontinu, ce qui signifie qu'il est nécessaire de les remplir, d'essorer les produits traités, puis de les vider avant de les remplir à nouveau. Ceci constitue un frein important à toute tentative d'améliorer les rendements de produits traités.

On connaît par le document FR-A-2 493 185, une essoreuse à effet centrifuge plus particulièrement destinée au traitement d'articles de densité élevée, tels que des pièces métalliques. Elle comprend un bol rotatif de réception des articles de section parabolique et d'axe de rotation incliné vers le bas, d'amont en aval.

Le bol est disposé totalement en porte à faux par rapport à ses moyens d'entraînement et de guidage en rotation de sorte que ses dimensions et, par conséquent sa capacité, sont nécessairement modestes. De plus, pour pouvoir soutenir convenablement ce bol, ses moyens de guidage ont nécessairement une longueur importante, ce qui pose des problèmes d'accessibilité au bol pour son approvisionnement.

Dans ce dispositif, les articles à essorer se déplacent à grande vitesse sous l'effet de la gravité car l'axe du bol est incliné. Ils restent très peu longtemps dans le bol, ce qui n'est pas satisfaisant pour la plupart des produits, notamment alimentaires.

La présente invention vise à pallier ces inconvénients.

On connaît du FR-A-2 625 799 une essoreuse du même type que l'invention, mais qui ne comporte pas de tambour d'axe horizontal et n'a pas les moyens de guidage en rotation situés exclusivement à l'intérieur du tambour à chacune de ses extrémités.

L'essoreuse conforme à l'invention permet de traiter une quantité importante de produits. Son approvisionnement autant que son déchargement sont faciles à effectuer du fait de la parfaite accessibilité à son tambour rotatif.

La présente invention vise également à proposer une essoreuse qui puisse, si nécessaire, être utilisée en continu, ce qui veut dire que des produits essorés peuvent être retirés de l'essoreuse pendant que de nouveaux y sont introduits.

Il s'agit d'une machine de conception simple, robuste et facile à utiliser.

Cette essoreuse à effet centrifuge pour des produits en vrac est remarquable par le fait qu'elle comporte un tambour rotatif d'axe horizontal sensiblement en forme de tronc de cône ouvert à ses deux extrémités, l'ouverture de moins grand diamètre permettant l'introduction des produits à essorer tandis que l'ouverture de plus grand diamètre en autorise la sortie, que ce tambour présente une série de trous pour le passage du liquide tels que des perforations en regard desquels est monté un capot de réception et d'évacuation du liquide extrait de la masse de produit, que l'ouverture de moins grand diamètre communique avec un canal d'alimentation dans lequel pénètrent des moyens d'alimentation en produits, et qu'elle comporte des moyens de guidage du tambour en rotation, situés exclusivement à l'extérieur du tambour, à chacune de ses extrémités.

Grâce à cette structure, le tambour rotatif n'est pas en porte à faux par rapport à ses moyens de guidage en rotation, de sorte que ses dimensions peuvent être relativement élevées.

De plus, du fait que les moyens de guidage sont situés à l'extérieur du tambour, aucun arbre ou autre pièce mécanique n'obstrue l'espace intérieur du tambour, ce qui en facilite l'approvisionnement et le vidage.

Selon d'autres caractéristiques avantageuses mais non limitatives :
- ces moyens de guidage consistent d'une part en un roulement formant couronne, monté du côté de l'ouverture de moins grand diamètre, et d'autre part en au moins un galet fou en rotation, associé à une voie de roulement annulaire solidaire du tambour et située au voisinage de l'ouverture de plus grand diamètre ;
- le tambour a, du côté de la sortie des produits, un profil plus évasé que le reste du tambour, par exemple de forme tronconique, cette partie du tambour n'étant pas perforée ;
- ledit tambour présente une série de trous seulement sur une partie de sa surface et il est équipé, de part et d'autre de cette zone, de deux couronnes extérieures d'étanchéité ;
- la partie pourvue de trous est prévue démontable et interchangeable ;
- l'essoreuse est pourvue d'un extracteur des produits essorés, monté mobile par rapport à celle-ci ;
- ledit extracteur comprend un élément conique rotatif destiné à être introduit dans le tambour par son ouverture de grand diamètre, dont la surface extérieure est pourvue d'une tôle à enroulement hélicoïdal, l'ensemble formant une vis d'Archimède ;
- elle comprend des moyens de soufflage d'air au travers de la paroi ajourée du tambour ;
- la vitesse de rotation du tambour est comprise, en phase d'essorage, entre 300 et 500 tours par minute ;
- elle est équipée d'un volet amovible adapté pour obturer l'ouverture de plus grand diamètre du tambour.

D'autres caractéristiques et avantages de la présente invention apparaîtront à la lecture de la description de certains modes de réalisation préférés, et en référence aux dessins annexés dans lesquels :
- la figure 1 est une vue de face, partiellement en coupe, d'une essoreuse conforme à l'invention ;
- la figure 2 est une vue de droite de l'essoreuse de la figure 1, à une échelle légèrement différente ;
- les figures 3 et 4 sont des vues partielles en perspective de deux formes de réalisation de tôles ajourées destinées à former, après cintrage, partie intégrante du tambour de l'essoreuse ;
- les figures 5 et 6 sont des vues partielles et en coupe verticale de la partie aval de l'essoreuse, celle-ci étant équipée d'un volet obturateur amovible ;
- la figure 7 est un diagramme destiné à montrer le cycle de fonctionnement de l'essoreuse en fonction des produits à traiter.

L'essoreuse conforme à l'invention représentée sur les dessins annexés repose sur un châssis métallique 1 comportant des pieds 10 d'appui au sol. Ce châssis affecte, en vue de dessus, la forme d'un rectangle allongé dont les grands côtés s'étendent parallèlement à l'axe XX' de rotation du tambour de l'essoreuse.

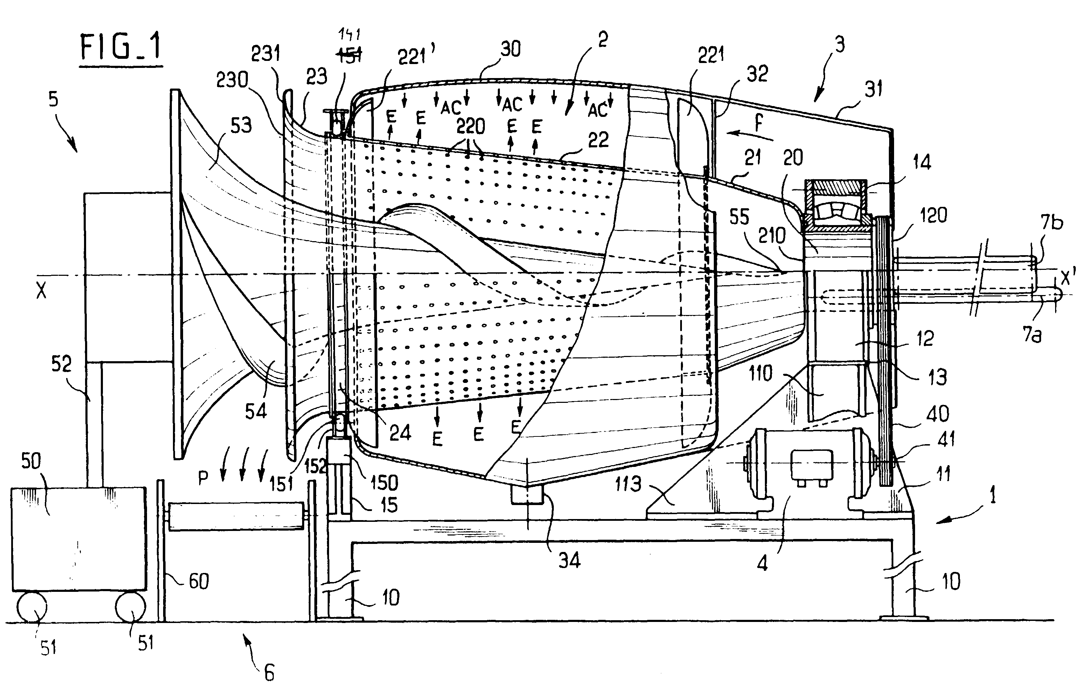

Dans la suite de la description, les termes "avant et arrière", appliqués à l'essoreuse et à ses éléments, correspondent respectivement aux parties de celle-ci qui sont représentées à droite et à gauche de la figure 1.

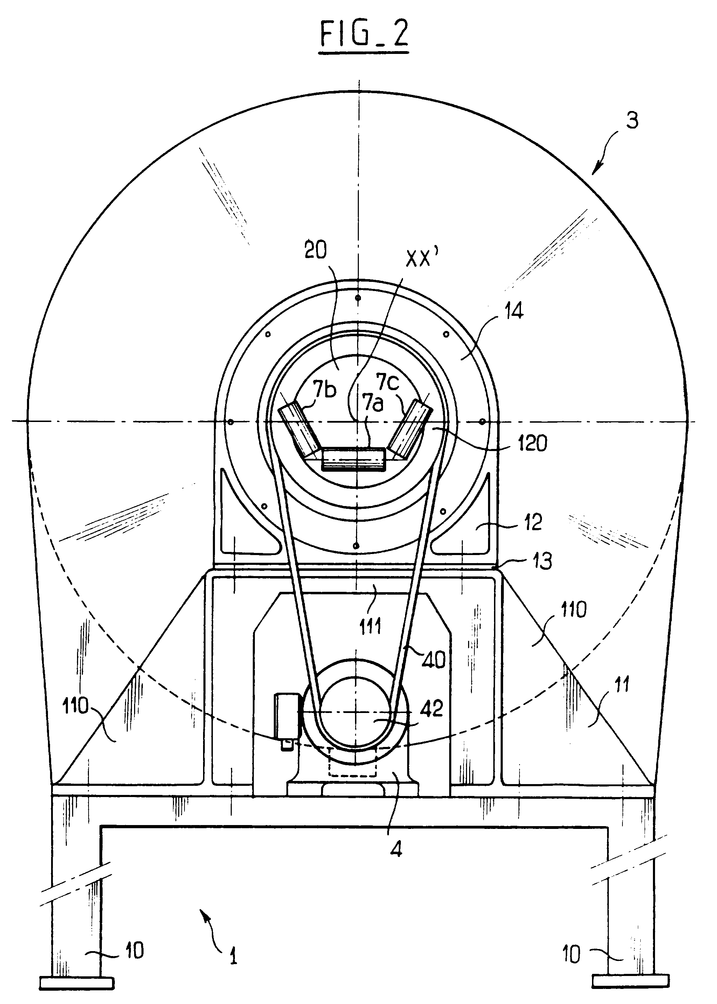

Sur la partie avant du châssis est fixé, à l'aide de moyens de type connu tels que des boulons, un socle métallique 11 destiné à soutenir une extrémité du tambour de l'essoreuse. Ce socle, vu transversalement (figure 2), a la forme générale d'un "U" renversé. Il comporte deux pieds 110 d'appui sur le châssis, à contour sensiblement triangulaire rectangle, symétriques l'un par rapport à l'autre et réunis dans leur partie supérieure par une partie intermédiaire ou "pont" 111 . Dans le sens longitudinal, ce socle comprend également deux pieds 113 qui s'étendent perpendiculairement aux pieds 110. Cette structure permet d'obtenir un parfait appui du socle sur le châssis.

Entre les pieds 110 du socle est monté un moteur 4, de préférence électrique, à vitesse règlable et avantageusement à deux sens de rotation.

L'arbre de sortie rotatif 41 de ce moteur est tourné vers l'avant de l'essoreuse. Une poulie à gorge 42 y est calée.

Sur la face supérieure du pont 111 du socle 11 est fixé un roulement à billes 14 formant couronne, disposé autour d'un canal cylindrique 20 formant, comme on le verra plus loin le canal d'alimentation du tambour de l'essoreuse. Ce roulement peut être prévu étanche ou non.

Bien entendu, d'autres types de roulement peuvent convenir, notamment des roulements à rouleaux ou à aiguilles.

Le support de roulement est fixé au socle au niveau de sa face inférieure par des moyens tels que des boulons. Toutefois, une feuille 13 de matériau souple tel que du caoutchouc est intercalée entre ces deux éléments. Sa fonction est d'absorber les vibrations provenant de l'essoreuse qui, sans cela, seraient intégralement transmises au châssis. Elle peut être constituée de tout matériau susceptible d'absorber les vibrations.

A la partie arrière du châssis 1, sensiblement à mi-distance de son bord transversal, est prévue une patte verticale 15 dont la face supérieure porte un tampon parallèlépipèdique 150 de matériau souple, de nature similaire à celle de la feuille 13. A ce tampon est fixé un étrier 152 à ailes verticales entre lesquelles est monté un galet 151 fou en rotation. Comme on le verra plus loin, à la verticale et en regard de ce galet est monté un deuxième galet 141, disposé à la partie supérieure de l'essoreuse. D'autres galets ou groupes de galets peuvent être prévus, régulièrement répartis à la périphérie de l'essoreuse.

Dans une autre variante, la patte 15 est dépourvue de tampon 150.

L'élément principal de cette dernière est constitué par un tambour métallique 2, d'axe de rotation horizontal XX', qui a la forme générale d'un tronc de cône évidé ouvert à ses deux extrémités 210 et 230. Son ouverture de moins grand diamètre 210 est tournée vers l'avant de l'essoreuse et est solidaire du cylindre 20 évoqué plus haut. L'extrémité libre de ce cylindre porte une poulie annulaire 120. Une courroie 40 transmet le mouvement de rotation de la poulie 42 du moteur 4 à cette dernière.

L'ouverture opposée 230 de l'essoreuse, de plus grand diamètre, surplombe le sol sur lequel est monté l'appareil et a un rebord très évasé vers l'extérieur, à la manière d'une embouchure de trompette.

Le tambour est guidé en rotation, d'une part par le roulement 14 qui entoure le cylindre 20 et d'autre part au moyen d'une couronne extérieure 24 disposée à la périphérie du tambour, non loin de son ouverture 230. Cette couronne forme une voie de roulement pour les galets 151 cités plus haut.

On notera que ces moyens de guidage sont disposés sensiblement aux extrémités opposées du tambour. De ce fait, ses dimensions et, par conséquent, sa capacité peuvent être relativement élevées comparativement à certaines essoreuses de l'état de la technique dans lesquelles le tambour est en porte à faux ou est traversé par un arbre rotatif.

De plus, ces moyens de guidage sont situés en-dehors du tambour. Son espace intérieur est donc complètement libre, que ce soit au niveau de sa zone d'approvisionnement qu'au niveau de sa zone de sortie.

Le tambour comporte trois parties essentielles. La première est constituée par le canal cylindrique 20 et par la partie amont 21 du tronc de cône avec lequel il communique. Cette partie 21 est formée d'une tôle pleine, par exemple en acier inoxydable.

La seconde partie 22 ou partie intermédiaire est ajourée et assure, de ce fait, l'essorage des produits alimentaires.

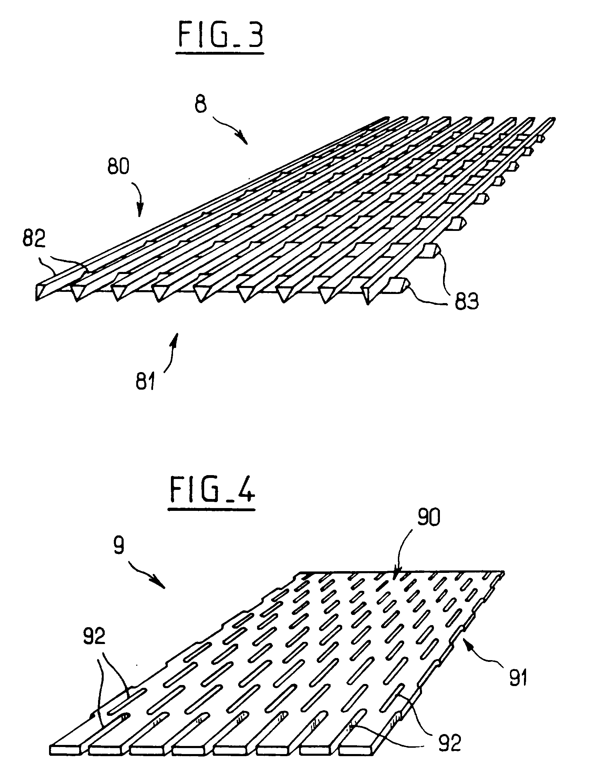

On a représenté aux figures 3 et 4 deux tôles ajourées susceptibles de constituer, après mise en forme, cette partie intermédiaire 22.

Dans une première forme de réalisation, la tôle 8 est formée d'un entrecroisement à angle droit de tiges métalliques 82 et 83 soudées les unes aux autres, de section en forme de triangle isocèle. La face supérieure 80 de cet assemblage est destinée à former la surface interne de la partie 22 du tambour tandis que sa face inférieure 81 en constituera la face externe. Les tiges 82 et 83 sont soudées les unes aux autres par la pointe opposée à leur face formant la base du triangle isocèle. Les ouvertures de maille ont donc, de la face 80 à la face 81, une section croissante puis décroissante. Bien entendu, l'espacement entre les tiges 82 est choisi de telle sorte que des produits à essorer ne puissent pas s'y loger. Les tiges 82 sont destinées à s'étendre selon les génératrices du tambour.

Dans la seconde forme de réalisation de la figure 4, il est formé dans la tôle métallique 9 une série d'ouvertures oblongues 92. De préférence, celles-ci sont formées par emboutissage de façon à disposer d'une face supérieure 90 sans aspérités ni bavures. Cette face est destinée à former la surface interne de la partie 22 du tambour. L'absence d'aspérité et de bavures évite d'avoir des phénomènes d'accrochage des produits par exemple alimentaires à la paroi et la formation d'agglomérats.

A la figure 4, les ouvertures 92 sont agencées en quinconce. Dans une autre forme de réalisation, elles peuvent être disposées en lignes. Par ailleurs, ces ouvertures peuvent être de section circulaire.

De préférence, environ 20 à 50 % de la surface de la tôle 9 est ajourée.

Enfin, la troisième partie 23 est formée d'une tôle pleine qui débouche sur l'ouverture 230 précitée.

De préférence, la partie 22 est prévue démontable et interchangeable de façon à pouvoir mettre en place sur le tambour un autre élément 22 présentant des trous de taille différente. Dans cette hypothèse, les trois parties 21, 22 et 23 sont tenues les unes aux autres au moyen de viroles boulonnées.

Aux deux extrémités de la partie 22, le tambour est muni, du côté de sa face externe, d'une couronne annulaire 221, respectivement 221', à profil arqué à la manière d'un rebord d'assiette. Leurs faces concaves se font face l'une à l'autre.

L'essoreuse comprend par ailleurs un capot 3 de protection et de récupération/évacuation des liquides extraits des produits. Il est par exemple réalisé en métal tel que de l'acier inoxydable.

Au niveau de la partie 22 du tambour, le capot 3 affecte la forme d'un tonneau 30 avec, à sa partie inférieure, un conduit d'évacuation 34. Du côté de la partie 23 du tambour, ce tonneau comporte une ouverture circulaire située légèrement en aval de la couronne 221'. De cette façon, ladite couronne constitue une barrière étanche entre l'intérieur du capot et l'extérieur.

Du côté de l'ouverture 210, le capot se poursuit en une partie d'extrémité 31, qui entoure le roulement 14 et le canal cylindrique 20. Une cloison interne annulaire 32 assure la séparation entre les parties 30 et 31. Elle est disposée en aval de la couronne 221, de sorte qu'elles forment toutes les deux associées, une barrière entre les parties 30 et 31.

L'essoreuse est équipée de moyens d'alimentation en produits à traiter. Comme le montrent les figures 1 et 2, ces moyens consistent en des convoyeurs sans fin 7a, 7b et 7c. Le convoyeur 7a est disposé horizontalement tandis que les convoyeurs 7b et 7c sont disposés en oblique, de chaque côté du convoyeur 7a. L'extrémité aval du convoyeur 7a se situe sensiblement au milieu du canal d'alimentation 20 de l'essoreuse. Leurs moyens d'entraînement sont de type connu. De préférence, leur vitesse d'avance est règlable de façon à pouvoir s'adapter au produit à traiter.

Du fait que le tambour est guidé en rotation au voisinage de ses extrémités opposées, le canal peut avoir une longueur réduite et un diamètre intérieur relativement grand, ce qui facilite l'introduction de produits volumineux dans le tambour à un débit élevé.

L'essoreuse peut être utilisée de manière optionnelle avec un extracteur qui porte la référence générale 5. Ce dernier comporte un chariot 50 muni de roues 51. Il est équipé de moyens moteurs non représentés et de type connu destinés à permettre son déplacement selon l'axe XX'. Le chariot porte une colonne verticale 52 dont la partie supérieure reçoit, en porte-à-faux un élément généralement conique 53, formée d'une tôle métallique. Il s'agit d'un cône creux de dimensions adaptées pour pouvoir rentrer, presque complètement, à l'intérieur du tambour 2, comme le montre la figure 1. Sa longueur est choisie de telle manière que sa pointe 55 se situe à proximité immédiate du canal 20 du tambour.

Dans un autre mode de réalisation, l'extracteur est monté de manière mobile sur le bâti de l'essoreuse et peut être amené sélectivement à l'intérieur du tambour.

La face externe du cône est équipée d'une tôle plate et fine 54 à enroulement hélicoïdal. Le cône 53 et la tôle 54 forment en quelque sorte une vis d'Archimède.

L'extracteur est muni de moyens moteurs non représentés qui permettent d'entraîner le cône 53 en rotation, autour de son propre axe, qui coïncide avec l'axe de rotation XX' du tambour 2. Ces moyens moteurs sont de préférence à double sens de rotation et à vitesse variable.

Enfin, l'essoreuse est équipée d'un convoyeur sans fin à bande 6 monté sur un châssis 60 et placé transversalement et à l'aplomb de l'extrémité 230 du tambour. Ce convoyeur est destiné à recueillir les produits alimentaires essorés. Bien entendu, ce convoyeur peut être remplacé par tout autre type de matériel remplissant la même fonction de réception et d'évacuation des produits traités. A titre d'exemple, il pourrait être remplacé par trois convoyeurs du type de ceux déjà décrits et portant les références 7a, 7b et 7c.

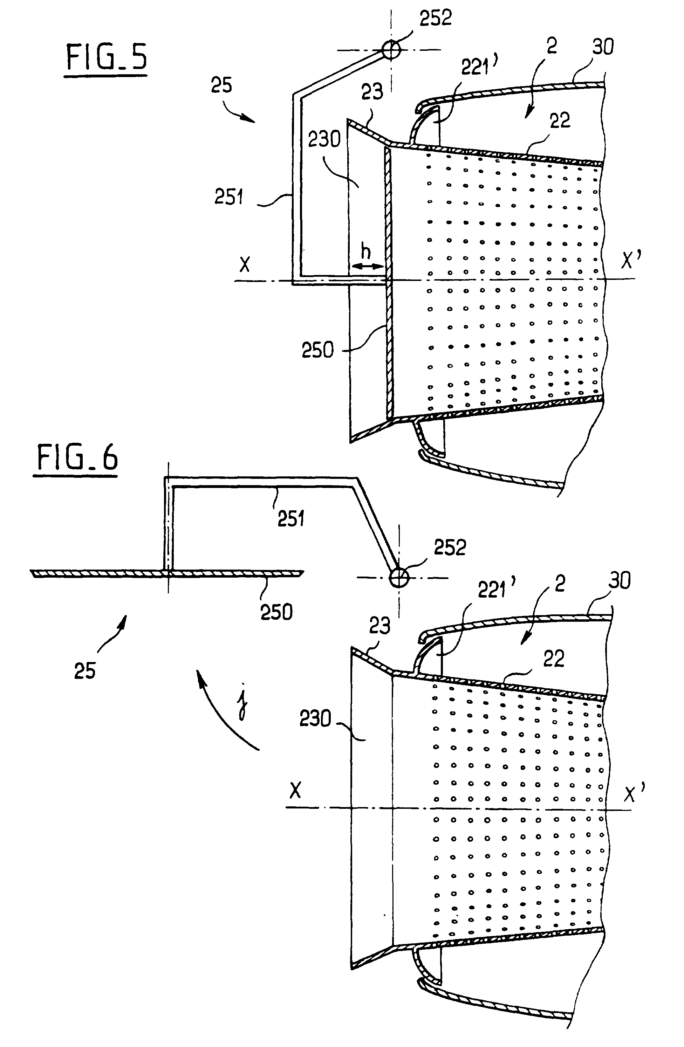

Dans le mode de réalisation des figures 5 et 6, la partie 23 du tambour n'a plus, comme décrit plus haut, une forme d'embouchure de trompette mais un profil plus évasé que le reste du tambour, à savoir tronconique. Bien entendu, cette partie est dépourvue de perforations.

De plus, l'essoreuse est équipée d'un outil amovible 25 d'obturation de l'ouverture 230 du tambour.

Cet outil est formé d'un volet 250 en forme de disque plat, dont le diamètre est très légèrement inférieur à celui du tambour 2, dans la région de jonction des parties 22 et 23. Cette différence de diamètre est par exemple de l'ordre de quelques millimètres.

Ce volet est monté à l'extrémité d'un bras coudé 251 monté pivotant autour d'un axe horizontal 252. Cet axe est disposé au-dessus de l'essoreuse, sensiblement à l'aplomb de la zone de jonction des zones 22 et 23 précités.

L'outil 25 peut être monté directement sur un élément fixe de l'essoreuse ou, dans un autre mode, être indépendant de celle-ci. Ainsi, par exemple, l'axe 253 peut être solidaire du plafond de la pièce dans laquelle est installée l'essoreuse.

Comme le montre plus particulièrement la figure 5, le volet peut être monté coulissant par rapport au bras 251 de façon à pouvoir régler son enfoncement à l'intérieur du tambour.

Les moyens pour manoeuvrer le bras 251 lors de son pivotement ainsi que ceux nécessaires au coulissement du volet 250 sont de type connu, par exemple des vérins pneumatiques.

Nous allons maintenant décrire le fonctionnement de l'essoreuse en combinaison avec l'extracteur 5. Toutefois, nous allons supposer que celui-ci, dans un premier temps, est complètement retiré du tambour 2.

On commence par mettre en route le moteur 4, qui entraîne, au moyen de la courroie 41, le tambour 2 en rotation autour de son axe XX'. On met en route le convoyeur 6 puis les convoyeurs 7a à 7c.

Les produits à essorer, par exemple du persil, sont progressivement déplacés par les convoyeurs précités et tombent par gravité dans le tambour 2 au niveau de sa partie d'alimentation 21. Du fait du mouvement rotatif du tambour, ils sont rapidement plaqués par effet centrifuge contre la paroi du tambour. Toutefois, dans cette zone 21, la paroi est pleine et lisse si bien que, du fait de sa conicité, les produits se déplacent progressivement vers la partie ajourée 22. C'est dans cette zone que s'effectue véritablement l'essorage, l'eau E extraite des produits passant au-travers des perforations 220 du tambour. L'eau E récupérée est collectée en fond de capot 2 et évacuée par la tuyauterie 34 raccordée, par exemple, au réseau de collectage des eaux usées.

En fonction de la nature et de la capacité des produits à former un amalgame ceux-ci stagnent dans la partie 22 ajourée ou, au contraire, se déplacent progressivement vers l'ouverture 230. Ainsi, par exemple, les produits feuillus et branchus tel que le persil ont tendance à s'agglomérer dans cette zone.

Les tôles 8 et 9, décrites en référence aux figures 3 et 4, ont tendance à réduire ce phénomène.

Ainsi, les mailles de la tôle 8 ont, du côté de leur face 80 des ouvertures de dimensions trop petites pour que des produits s'y coincent.

De même, l'absence d'aspérités sur la face 91 de la tôle 9 contribue à réduire les possibilités de retenue des produits, tout en favorisant, bien entendu, l'évacuation de l'eau par effet centrifuge.

Les produits P qui arrivent à se déplacer le long du tambour sont progressivement évacués vers l'extérieur du fait de la forme évasée de l'ouverture 230 et de l'état de surface du tambour dans cette zone. De plus, les produits ont été débarassés de leur eau. De ce fait, ils sont plus légers, ce qui facilite leur déplacement. Les produits essorés P retombent alors par gravité dans le convoyeur 6 à l'aide duquel ils sont évacués.

Le capot 3 est avantageusement équipé, à l'intérieur de la partie 30, de buses de soufflage d'air comprimé qui dirigent des jets d'air AC en direction du tambour perforé. De préférence, une batterie est disposée en ligne le long de la partie supérieure du tambour 2 dans sa zone perforée et deux autres batteries sont disposées symétriquement de part et d'autre de la première, selon un écartement angulaire d'environ 45°.

Ces buses de soufflage ne sont mises en fonctionnement que si les produits ont tendance à s'agglomérer à l'intérieur du tambour. Pour le vider, il est alors nécessaire de ralentir sa vitesse de rotation, voire de l'arrêter puis de le remettre en route à vitesse réduite dans l'autre sens. Une vitesse réduite, combinée à une soufflerie, permet de décoller les produits et de les extraire du tambour.

Il est également possible d'utiliser, au lieu des buses de soufflage d'air, l'extracteur 5. Pour ce faire, le tambour 2 et les convoyeurs 7a à 7c sont à l'arrêt. On déplace alors le chariot 50 de manière à engager le cône 53 à l'intérieur du tambour 2, selon l'axe XX'. On met alors en route les moyens de rotation du cône 53 et du tambour 2, de préférence en sens inverse. Le filet 54 du cône 53 racle alors les produits essorés qui sont forcés de se déplacer vers l'ouverture 230 du tambour.

Bien entendu, la position de l'extracteur 5 dans le tambour peut être réglée pour tenir compte de l'épaisseur de produits et de la nature de ceux-ci.

Lorsque l'évacuation des produits se fait d'elle-même, c'est-à-dire sans nécessiter l'emploi des buses de soufflage d'air ou de l'extracteur, l'alimentation et le vidage de l'essoreuse se font alors en continu.

Lors de la phase d'essorage, il peut s'avérer utile d'obturer la plus grande ouverture du tambour par l'outil 25. Ceci est particulièrement le cas pour l'essorage de morceaux de légumes, tels que des petits cubes de carottes ou des produits de densité similaire. En effet, ceux-ci ont tendance à sortir de l'essoreuse avant même d'être essorés.

Pour ce faire, le volet est rabattu en direction du tambour, préalablement à la mise en route de ce dernier. On prendra soin de régler la position du volet, afin qu'il se situe au voisinage immédiat de la tôle du tamour, ceci afin d'éviter que les produits s'échappent de l'essoreuse.

Pour l'évacuation des produits essorés, il suffit de procéder au elevage de l'outil 25, dans le sens de la flèche j.

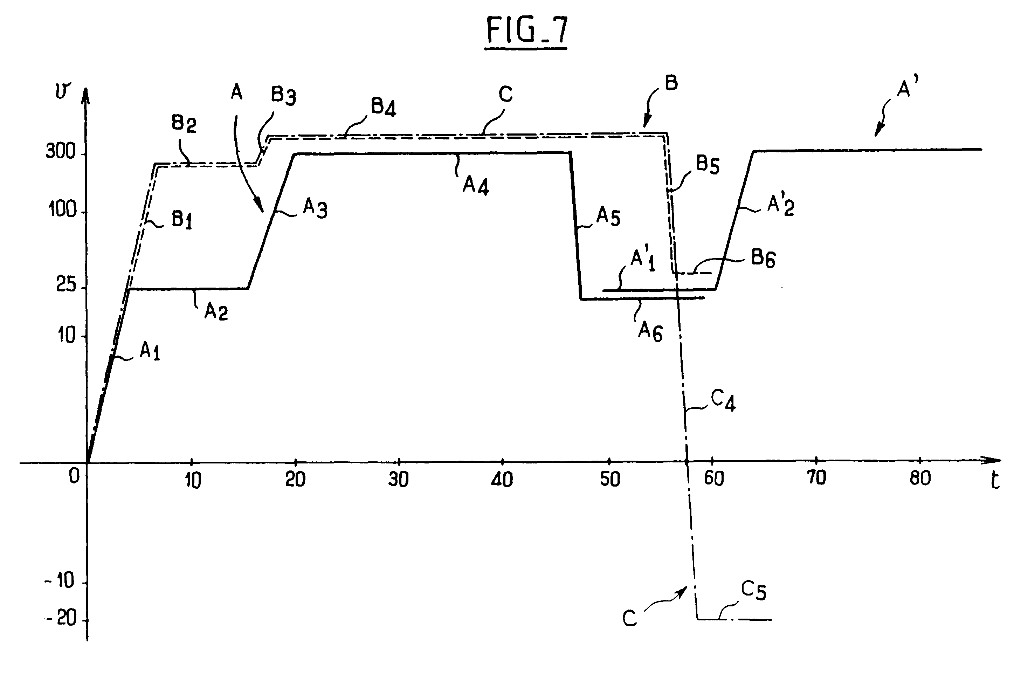

A la figure 7, on a représenté sous forme de diagramme, des cycles de traitement possibles pour des produits à essorer.

En abscisse figure l'axe du temps (en seconde), tandis qu'en ordonnée est indiquée la vitesse de rotation du tambour (en tours par minute). Toutefois, afin de faciliter la représentation et la lecture du diagramme, les vitesses ont été représentées sur une échelle logarithmique.

Le cycle A, en traits pleins, correspond au traitement de produits feuillus tels que du persil. Les cycles B et C, respectivement en traits pointillés et mixtes, correspondent au traitement de légumes en cubes, tels que des carottes, et au traitement de produits collants.

En référence au cycle A, la phase A1 correspond simplement à une montée rapide en vitesse du tambour jusqu'à environ 25 tours/minute. On procède alors au chargement du tambour pendant la phase A2 qui dure environ 10 secondes. Après une montée en vitesse (A3) jusqu'à environ 300 tours/minute, s'opère l'essorage proprement dit, ce qui correspond à la phase A4. Enfin, on procède au ralentissement du tambour (phase A5) puis à son vidage (A6) à vitesse réduite, de l'ordre de 25 tours/minute.

La durée des phases A3 à A5 aura été mise à contribution pour amener, à proximité des moyens de chargement de l'essoreuse, de nouveaux produits à traiter, lesquels ne sont réellement chargés que lors du vidage hors de l'essoreuse des produits essorés préalablement. Ceci correspond à la phase A'1 du nouveau cycle A', qui chevauche dans le temps, la réalisation de la phase A6.

Le cycle B a sensiblement la même allure que le cycle A si ce n'est que les différentes phases B1 à B6 se font à des vitesses plus élevées.

Dans le cas d'une matière collante (cycle C), en vue du déchargement de la matière essorée, on procède à une inversion du sens de rotation du tambour, ce qui correspond, sur le diagramme, à une vitesse négative de l'ordre de - 20 tours/minute.

A titre indicatif, une machine conforme à l'invention mesure approximativement 4,50 mètres de long, 2,50 mètres de large et 3 à 3,50 mètres de hauteur.

La partie 22 du tambour présente des diamètres d'extrémité d'ordre de grandeur suivants :
- plus grand diamètre = 1,50 m.
- moins grand diamètre = 1,05 m.

Le diamètre du canal d'alimentation peut être de l'ordre de 0,45 m.

En fonctionnement continu, elle permet de traiter 3 à 4 tonnes à l'heure de produits alimentaires de type feuillus. Pour des produits tels que des cubes de carottes, on peut traiter jusqu'à 10 tonnes à l'heure.

Les produits essorés, récupérés par le convoyeur 6, sont déplacés à un autre poste, par exemple en vue de leur surgélation ou de leur déshydratation.

Bien entendu, le moteur 4 est choisi de manière à permettre l'entraînement du tambour 2 à pleine charge. Il doit être également prévu pour pouvoir subir des variations même brusques de régime, parfois nécessaires pour le déchargement de certains produits.

A titre indicatif, la vitesse maximale du tambour 2 est de l'ordre de 300 à 500 tours par minute tandis que celle de l'extracteur 5 est de 100 tours par minute.

Il peut être prévu, à la sortie du tambour 2, un carter ou un filet destiné à recueillir les produits qui s'en échapperaient inopinément (au cours de l'essorage).

Bien entendu, l'essoreuse de l'invention est construite conformément aux normes de sécurité en vigueur.

## Revendications

1. Essoreuse à effet centrifuge pour des produits en vrac (P), caractérisée en ce qu'elle comporte un tambour rotatif (2) d'axe horizontal (X, X') sensiblement en forme de tronc de cône ouvert à ses deux extrémités (210, 230), l'ouverture de moins grand diamètre (210) permettant l'introduction des produits (P) à essorer tandis que l'ouverture de plus grand diamètre (230) en autorise la sortie, en ce que ce tambour (2) présente une série de trous pour le passage du liquide, tels que des perforations (220) en regard desquels est monté un capot (3) de réception et d'évacuation du liquide extrait de la masse de produit, en ce que l'ouverture (210) de moins grand diamètre communique avec un canal d'alimentation (20) dans lequel pénètrent des moyens d'alimentation (7a) en produits (P), et en ce qu'elle comporte des moyens de guidage (14, 151) du tambour (2) en rotation, situés exclusivement à l'extérieur du tambour (2), à chacune de ses extrémités.

2. Essoreuse selon la revendication 1, caractérisée en ce que ces moyens de guidage consistent d'une part en un roulement (14) formant couronne, monté du côté de l'ouverture de moins grand diamètre (210), et d'autre part en au moins un galet (151) fou en rotation, associé à une voie de roulement annulaire (24) solidaire du tambour et située au voisinage de l'ouverture (230) de plus grand diamètre.

3. Essoreuse selon l'une des revendications 1 ou 2, caractérisée en ce que le tambour (2) a, du côté de la sortie des produits (P), un profil plus évasé que le reste du tambour, par exemple de forme tronconique, cette partie du tambour n'étant pas perforée.

4. Essoreuse selon l'une des revendications 1 à 3, caractérisée en ce que ledit tambour présente une série de trous (220) seulement sur une partie (22) de sa surface et en ce qu'il est équipé, de part et d'autre de cette zone, de deux couronnes extérieures d'étanchéité (221, 221').

5. Essoreuse selon la revendication 4, caractérisée en ce que ladite partie (22) est prévue démontable et interchangeable.

6. Essoreuse selon l'une des revendications 1 à 5, caractérisée en ce qu'elle est pourvue d'un extracteur (5) des produits (P) essorés, monté mobile par rapport à celle-ci.

7. Essoreuse selon la revendication 6, caractérisée en ce que ledit extracteur (5) comprend un élément conique (53) rotatif destiné à être introduit dans le tambour (2) par son ouverture de grand diamètre, dont la surface extérieure est pourvue d'une tôle (54) à enroulement hélicoïdal, l'ensemble formant une vis d'Archimède.

8. Essoreuse selon l'une des revendications 1 à 7, caractérisée en ce qu'elle comprend des moyens (AC) de soufflage d'air au travers de la paroi ajourée (22) du tambour (2).

9. Essoreuse selon l'une des revendications 1 à 8, caractérisée en ce que la vitesse de rotation du tambour est comprise, en phase d'essorage, entre 300 et 500 tours par minute.

10. Essoreuse selon l'une des revendications 1 à 9, caractérisée en ce qu'elle est équipée d'un volet amovible adapté pour obturer l'ouverture de plus grand diamètre (230) du tambour.

## Patentansprüche

1. Trockenschleuder für Schüttgut (P), dadurch **gekennzeichnet**, daß sie eine drehbare Trommel (2) mit horizontaler Achse (X, X') umfaßt, die im wesentlichen die Gestalt eines an seinen beiden Enden (210, 230) offenen Kegelstumpfes hat, wobei die Öffnung (210) mit kleinerem Durchmesser das Einführen von zu trocknendem Schüttgut (P) ermöglicht, wohingegen die Öffnung (230) mit größerem Durchmesser dessen Austritt erlaubt, daß die Trommel (2) eine Reihe von Löchern für den Durchgang von Flüssigkeit aufweist, wie beispielsweise Perforationen (220), denen gegenüberliegend eine Haube (3) zum Auffangen und Ausleeren von aus der Schüttgutmasse entzogener Flüssigkeit angeordnet ist, daß die Öffnung (210) mit kleinerem Durchmesser in Verbindung mit einem Zuführkanal (20) steht, in den Mittel (7a) zum Beschicken mit Schüttgut (P) eindringen, und daß sie Mittel (14, 151) zum Führen der rotierenden Trommel (2) umfaßt, die ausschließlich außerhalb der Trommel (2) an ihren beiden Enden angeordnet sind.

2. Trockenschleuder nach Anspruch 1, dadurch **gekennzeichnet**, daß die Führungsmittel einerseits aus einem einen Kranz bildenden Wälzlager (14), das auf der Seite der Öffnung (210) mit kleinerem Durchmesser angebracht ist, und andererseits aus wenigstens einer drehbaren Schlepprolle (151) besteht, die mit einer ringförmigen Laufbahn (24) verbunden ist, die fest mit der Trommel verbunden ist und sich in der Nähe der Öffnung (230) mit größerem Durchmesser befindet.

3. Trockenschleuder nach Anspruch 1 oder 2, dadurch **gekennzeichnet**, daß die Trommel (2) auf der Seite des Austrittes von Schüttgut (P) ein Profil hat, das stärker als der Rest der Trommel, zum Beispiel kegelstumpfartig erweitert ist, wobei dieser Teil der Trommel nicht perforiert ist.

4. Trockenschleuder nach einem der Ansprüche 1 bis 3, dadurch **gekennzeichnet**, daß die Trommel ausschließlich auf einem Teil (22) ihrer Oberfläche eine Reihe von Löchern (220) aufweist und daß die Trommel auf beiden Seiten dieser Zone mit zwei äußeren Dichtkränzen (221, 221') versehen ist.

5. Trockenschleuder nach Anspruch 4, dadurch **gekennzeichnet**, daß der Teil (22) abnehmbar und auswechselbar ausgebildet ist.

6. Trockenschleuder nach einem der Ansprüche 1 bis 5, dadurch **gekennzeichnet**, daß sie mit einer Entnahmevorrichtung (5) für getrocknetes Schüttgut (P) versehen ist, die in bezug auf die Trockenschleuder verstellbar angebracht ist.

7. Trockenschleuder nach Anspruch 6, dadurch **gekennzeichnet**, daß die Entnahmevorrichtung (5) ein drehbares konisches Element (53) umfaßt, das dazu bestimmt ist, in die Trommel (2) durch deren Öffnung mit größerem Durchmesser eingeführt zu werden, und dessen äußere Oberfläche mit einem schraubenförmig gewickelten Blech (54) so versehen ist, daß dieses Gebilde eine archimedische Schraube bildet.

8. Trockenschleuder nach einem der Ansprüche 1 bis 7, dadurch **gekennzeichnet**, daß sie Mittel (AC) zum Blasen von Luft durch die gelochte Seitenwand (22) der Trommel (2) hindurch umfaßt.

9. Trockenschleuder nach einem der Ansprüche 1 bis 8. dadurch **gekennzeichnet**, daß die Drehzahl der Trommel während der Trocknungsphase zwischen 300 und 500 Umdrehungen pro Minute liegt.

10. Trockenschleuder nach einem der Ansprüche 1 bis 9, dadurch **gekennzeichnet**, daß sie mit einer beweglichen Klappe ausgestattet ist, die so ausgebildet ist, daß sie die Öffnung (230) mit größerem Durchmesser der Trommel verschließen kann.

## Claims

1. Centrifugal spin drier for loose products (P), characterized in that it includes a rotary drum (2) of horizontal axis (X, X') substantially in the shape of a cone frustum open at both ends (210, 230), the smaller-diameter opening (210) allowing the insertion of the products (P) to be spin dried while the larger-diameter opening (230) allows them to be removed, in that this drum (2) has a series of holes for the passage of the liquid, such as perforations (220), facing which there is mounted a cover (3) for collecting and discharging the liquid extracted from the mass of product, in that the smaller-diameter opening (210) communicates with a feed duct (20) into which means (7a) for feeding with products (P) penetrate, and in that it includes means (14, 151) for guiding the rotation of the drum (2), these means being situated exclusively on the outside of the drum (2) at each of its ends.

2. Spin drier according to Claim 1, characterized in that these guide means consist, on the one hand, of a rolling bearing (14) forming a ring, mounted on the smaller-diameter opening (210) end, and on the other hand, at least one roller (151) which can rotate freely, associated with an annular runway (24) integral with the drum and situated close to the larger-diameter opening (230).

3. Spin drier according to one of Claims 1 and 2, characterized in that the drum (2), on the side from which the products (P) are removed, has a profile which is more flared than the rest of the drum, for example a frustoconical shape, this part of the drum not being perforated.

4. Spin drier according to one of Claims 1 to 3, characterized in that the said drum has a series of holes (220) only over a part (22) of its surface area and in that it is equipped, on each side of this region, with two external sealing rings (221, 221').

5. Spin drier according to Claim 4, characterized in that the said part (22) is designed to be removable and interchangeable.

6. Spin drier according to one of Claims 1 to 5, characterized in that it is provided with an extractor (5), mounted so that it can move with respect to this spin drier, for extracting the dried products (P).

7. Spin drier according to Claim 6, characterized in that the said extractor (5) comprises a conical element (53) which can rotate, intended to be inserted into the drum (2) through its large-diameter opening, the outside surface of which is provided with a helically wound thin metal sheet (54), the whole forming an archemedean screw.

8. Spin drier according to one of Claims 1 to 7, characterized in that it comprises means (AC) for blowing air through the perforated wall (22) of the drum (2).

9. Spin drier according to one of Claims 1 to 8, characterized in that the rotational speed of the drum during the spin-drying phase lies between 300 and 500 revolutions per minute.

10. Spin drier according to one of Claims 1 to 9, characterized in that it is equipped with a removable shutter designed to close off the larger-diameter opening (230) of the drum.
